(19) **Europäisches Patentamt / European Patent Office / Office européen des brevets**

(11) **EP 2 549 641 A1**

(12) **EUROPEAN PATENT APPLICATION**
published in accordance with Art. 153(4) EPC

(43) Date of publication:
**23.01.2013 Bulletin 2013/04**

(21) Application number: **11755942.7**

(22) Date of filing: **18.03.2011**

(51) Int Cl.:
*H02P 9/00* (2006.01)    *G06Q 10/00* (2012.01)
*G06Q 50/00* (2012.01)    *H02J 3/00* (2006.01)

(86) International application number:
**PCT/JP2011/001648**

(87) International publication number:
**WO 2011/114752 (22.09.2011 Gazette 2011/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2010 JP 2010065083**

(71) Applicant: **Kabushiki Kaisha Toshiba**
**Minato-ku**
**Tokyo 105-8001 (JP)**

(72) Inventors:
• **MURAKAMI, Yoshiki**
  **Tokyo 105-8001 (JP)**
• **KOBAYASHI, Takenori**
  **Tokyo 105-8001 (JP)**
• **HIROMASA, Katsutoshi**
  **Tokyo 105-8001 (JP)**
• **KOSAKA, Yoko**
  **Tokyo 105-8001 (JP)**
• **KUSANO, Hideo**
  **Tokyo 105-8001 (JP)**
• **WATANABE, Kenji**
  **Tokyo 105-8001 (JP)**
• **HAYASHI, Hideki**
  **Tokyo 105-8001 (JP)**

(74) Representative: **Fritsche, Daniel**
**Awapatent AB**
**Södra Hamngatan 37-41**
**Box 11394**
**404 28 Göteborg (SE)**

(54) **DEVICE FOR PREDICTION OF ELECTRICITY GENERATION AMOUNT, METHOD FOR SAME, AND PROGRAM FOR SAME**

(57) An electric-power-generation level predicting apparatus 1 includes a memory unit 20 that stores, as past data relating to a past electric power generation level of an electric power generator, past data containing information at multiple time points in each day, and an predicted-value calculating unit 13 that calculates, as time-series data containing an occurrence probability, an predicted value of the past data relating to an electric power generation level of the electric power generator based on a statistical correlation between different times in the past data or a statistical correlation between locations of the different electric power generators. The predicted-value calculating unit 13 includes a variance-covariance-matrix generator unit 131 that generates a variance-covariance matrix based on the past data, and a random-number generator unit 132 that generates a random number following the probability distribution based on the variance-covariance matrix.

*FIG. 1*

EP 2 549 641 A1

**Description**

FIELD

Embodiments described herein relate generally to an electric-power-generation level predicting apparatus which predicts an electric-power-generation level of an electric power generator utilizing natural energies, such as wind power generation and solar power generation, and also relates to a method and a program thereof.

BACKGROUND

Electric power generation utilizing natural energies, such as wind and solar light, has advantages such that no fuel cost is necessary, and no greenhouse gas is produced. Conversely, in general, natural energies depend on a weather, and have a disadvantage that the electric power generation utilizing such natural energies is uncertain and is difficult to predict. So far, an electric power generation level by natural energies is predicted mainly based on the result of a weather forecast.

Patent Document 1: JP 2004-289918 A

Non-patent Document 1: Akinobu MURATA, Hiroshi YAMAGUCHI, Kenji OHTANI, "Prediction technique of fluctuation in output range in solar power generation with multiple power generators installed at broad regions", Thesis B for the Institute of Electrical Engineering of Japan, volume 127, 5th issue, 2007, pp. 645 to 652

As a conventional technology of predicting an electric power generation level by natural energies, a technique is known which predicts an electric power generation level by natural energies based on weather information and which compensates the shortage by a dynamo electric generator. Such a prediction technique is, however, not in consideration of the fluctuation range.

Conversely, it is known that when there are multiple electric power generators utilizing natural energies, respective fluctuation ranges overlap, and thus the total fluctuation becomes small. Accordingly, in order to predict the total electric power generation level by the multiple electric power generators utilizing natural energies, it is necessary to sum up the predicted values in consideration of a correlation among those electric power generators.

In contrast, there is a technique of predicting the fluctuation of the total output in consideration of a correlation through, for example, an approximation formula. According to this technique, however, there is a disadvantage that an error is large. Moreover, according to the conventional technologies, it is difficult to predict the total output of a specific power plant in consideration of a correlation.

Conversely, when the power demand level and the power generation level are not balanced precisely, an electric power system becomes unstable such that a frequency fluctuates from a predetermined value. Hence, when electric power generation utilizing natural energies is adopted, it is necessary to pay an extraordinary attention to manage the electric power system.

However, the fluctuation in a frequency relates to the fluctuation in the electric power generation level. Moreover, as explained above, electric power generation by natural energies, such as wind power generation and solar power generation, has an electric power generator that uncertainly fluctuates the electric power generation level. Hence, according to the prediction techniques of the conventional technologies, it is difficult to stably manage the electric power system in consideration of such a fluctuation.

The electric power generation level by a wind power generator can be substantially predictable if the direction of of wind and the speed thereof are determined. For example, FIG. 16 shows a wind speed per an hour at a certain location in TOKYO in August and in any given year. Moreover, FIG. 17 shows a wind direction at the same location per an hour. In order to indicate a wind direction in FIG. 17, as shown in FIG. 18, a direction is subjected to numerical terms.

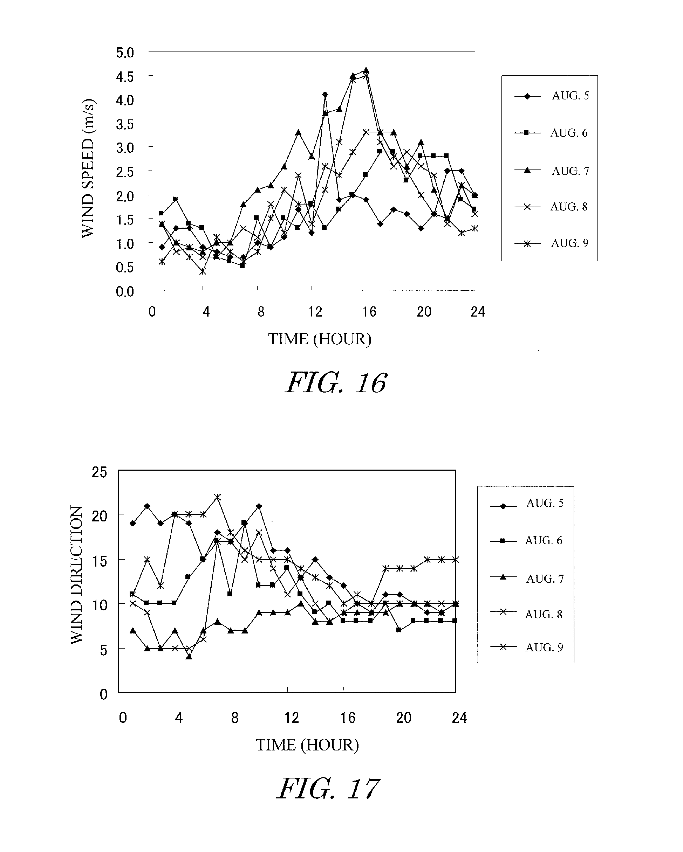

In view of those FIGS. 16 and 17, it looks like that the wind speed and the wind direction change at random. However, there is a certain tendency for each day in a deep glance. For example, the wind speed at this season and at this location is slow in the morning but becomes fast in the afternoon, and the faster the wind speed is, the larger the fluctuation becomes. Conversely, the wind direction largely changes when the wind speed is slow, but there is a tendency that when the wind speed is fast, the wind direction becomes constant.

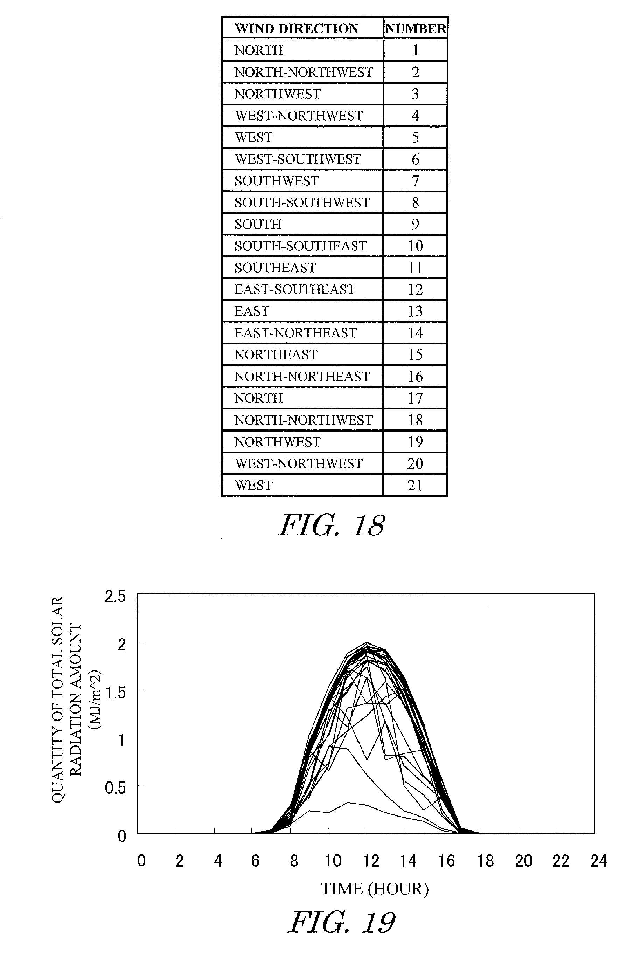

Moreover, the electric power generation level of solar power generation can be substantially predictable if the location, the installing way of the electric power generator, and the amount of solar radiation are determined. For example, FIG. 19 shows an amount of solar radiation at a certain location in TOKYO in December and in any given year. As is clear from FIG. 19, also, the amount of solar radiation is not completely at random, and most pieces of data are similar to a certain curve, and when the amount of solar radiation is little in the morning, the amount of solar radiation in the afternoon is also little.

As explained above, what is common to both wind power data and solar-radiation-amount data is that both data are not completely at random but are difficult to perfectly predict. Therefore, a prediction in consideration of a certain error is necessary. Moreover, in a prediction, it is necessary to perform prediction so as to satisfy a certain tendency based on past data. Such a tendency depends on a location and a season. Moreover, a relationship between a morning and an afternoon or time by time is important. The relationship time by time is referred to as a time correlation.

Both wind power generator and solar power generator have an electric power generation level depending on a weather condition. Accordingly, the electric power generation levels of the electric power generators at the same location are similar, but the electric power generation level of the electric power generator located at a distant location has a completely different pattern. If it is within several km or so, it can be considered that the weather condition is similar, and there should be a similarity in the pattern of the electric power generation level. This is referred to as a positional correlation. Even if those electric power generators are installed at adjacent locations, the wind speed and the amount of solar radiation are not completely consistent, and thus it is necessary to consider the positional correlation.

As explained above, in both cases of the wind power generator and the solar power generator, when predicting the electric power generation level of an electric power generator, it is necessary to consider a time correlation. Moreover, when simultaneously predicting the electric power generation levels of the multiple electric power generators, it is necessary to consider a positional correlation. However, according to the conventional prediction techniques, it is not easy to perform prediction in consideration of the time correlation and the positional correlation.

The embodiments described herein have been made in order to address the above-explained technical issues of the conventional technologies, and it is an object to provide electric-power-generation level predicting apparatus, method and program which can predict an electric power generation level in consideration of a statistical correlation even in a case of an electric power generator that has an electric power generation level uncertainly fluctuated.

To achieve the above object, according to one aspect, an electric-power-generation level predicting apparatus that obtains a predicted value relating to an electric power generation level of equal to or greater than one electric power generator having an electric power generation level uncertainly fluctuating includes the following past-data storing unit and predicted-value calculating unit. That is, the past-data storing unit stores, as past data relating to a past electric power generation level of at least one electric power generator, past data containing information at multiple time points in each day. The predicted-value calculating unit calculates, as time-series data containing an occurrence probability, a predicted value of the past data relating to an electric power generation level of the electric power generator based on a statistical correlation between different times in the past data or a statistical correlation between locations of the different electric power generators. According to the other aspects, respective functions of the above-explained units can be realized as a method executed by a computer or a program.

BRIEF DESCRIPTION OF DRAWINGS

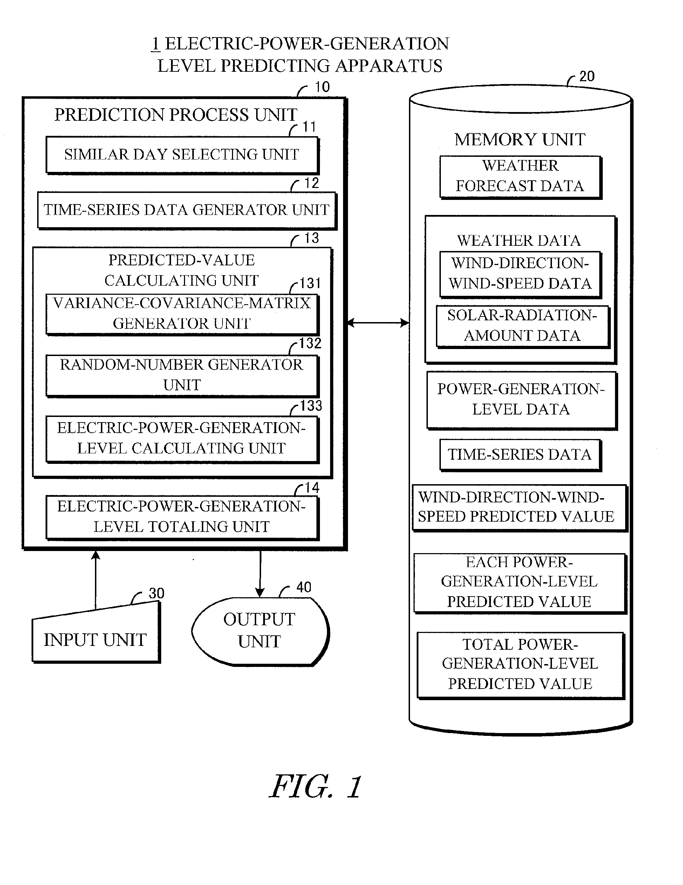

FIG. 1 is a block diagram showing an electric-power-generation level predicting apparatus according to an embodiment;

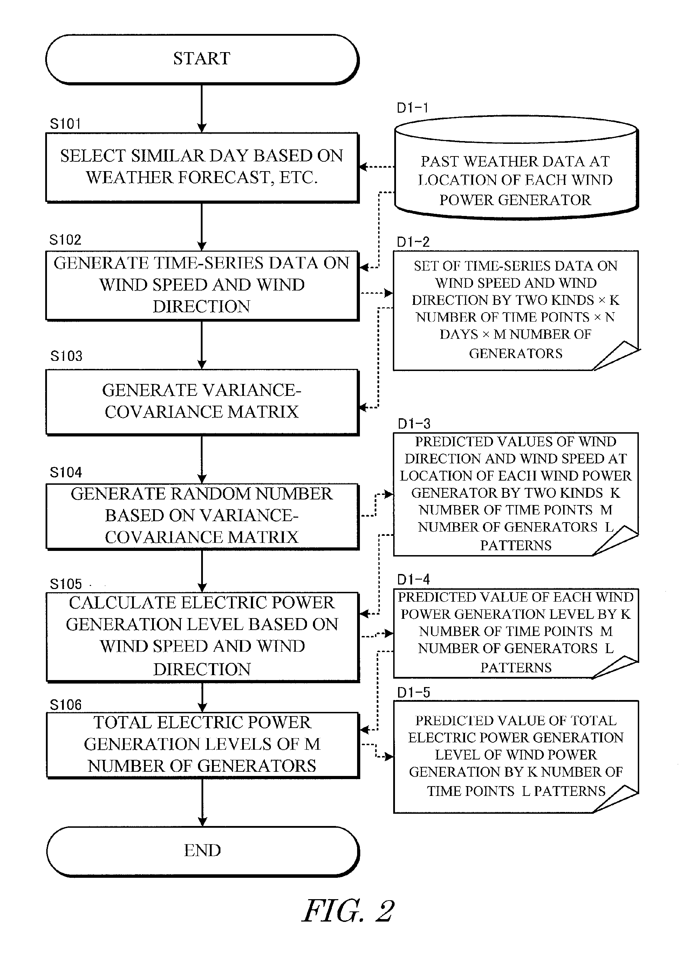

FIG. 2 is a flowchart showing a process of predicting an electric power generation level of wind power generation based on wind speed and wind direction data according to the embodiment shown in FIG. 1;

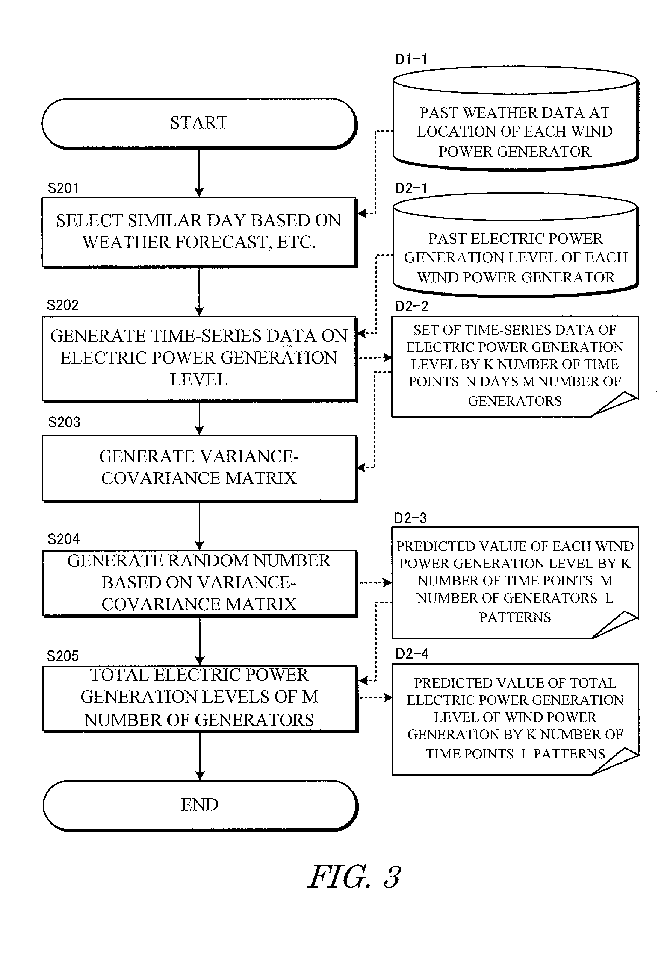

FIG. 3 is a flowchart showing a process of predicting an electric power generation level of wind power generation based on data of an electric power generation level in the case of the embodiment shown in FIG. 1;

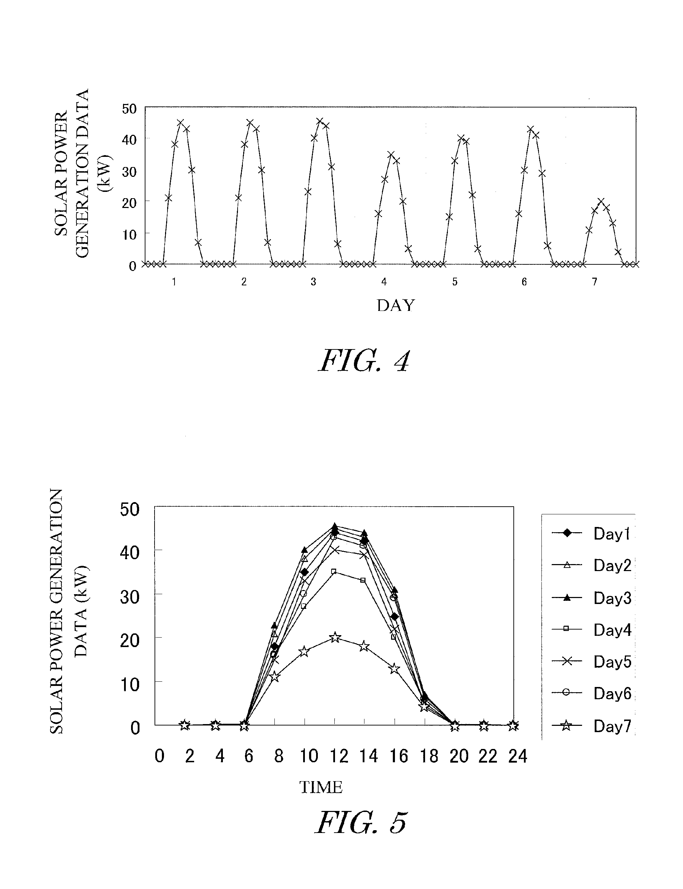

FIG. 4 is an explanatory diagram showing example electric-power-generation-level data at a past similar day in solar power generation;

FIG. 5 is an explanatory diagram showing an example having the electric-power-generation-level data of FIG. 1 overwritten;

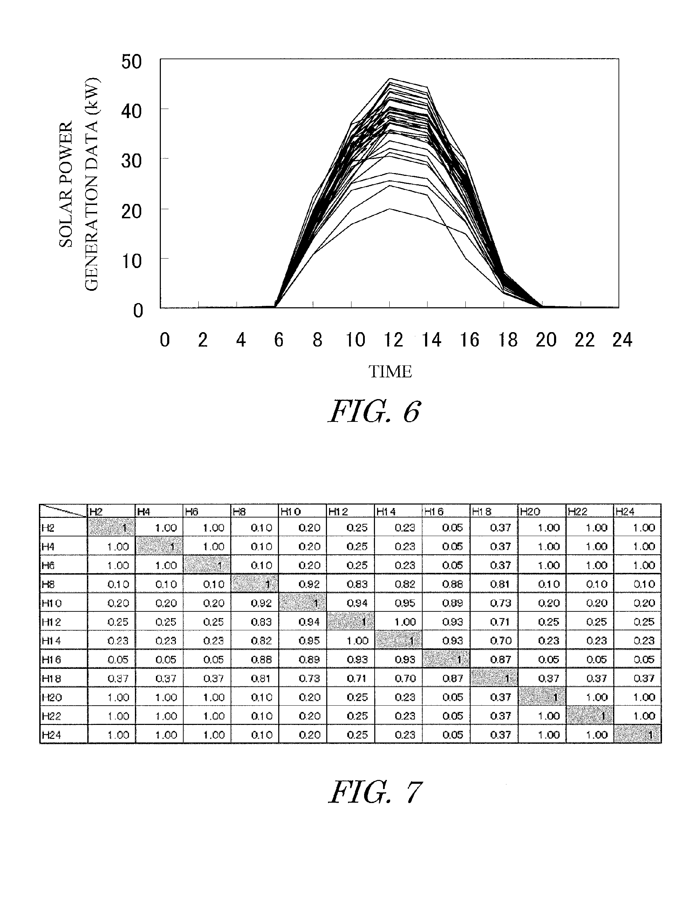

FIG. 6 is an explanatory diagram showing a simulation result of an electric-power-generation-level predicting value of solar power generation based on the electric-power-generation-level data of FIG. 1;

FIG. 7 is an explanatory diagram showing an example correlation coefficient matrix of FIG. 6;

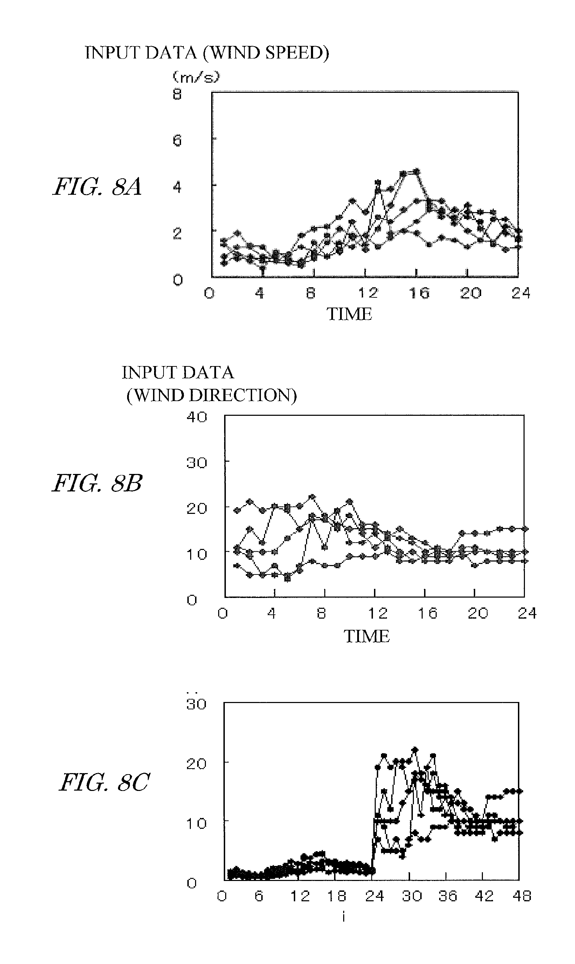

FIG. 8 is an explanatory diagram showing past wind speed data in FIG. 8A, wind direction data of wind power generation in FIG. 8B and data having the wind speed data and the wind direction data overwritten with each other in FIG. 8C;

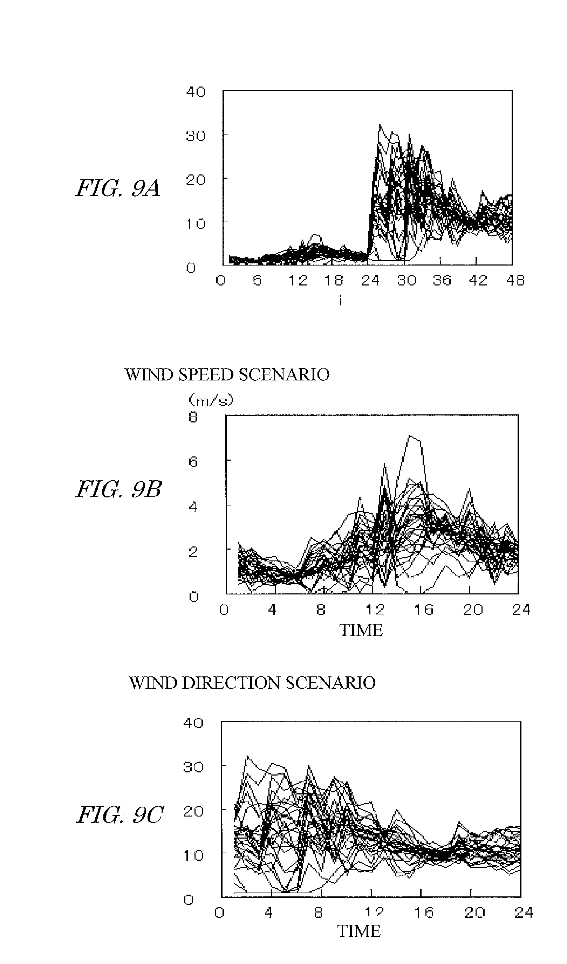

FIG. 9 is an explanatory diagram showing a prediction result in time series including a wind speed and a wind direction in FIG. 9A, a prediction result for a wind speed in FIG. 9B, and a prediction result for a wind direction in FIG. 9C;

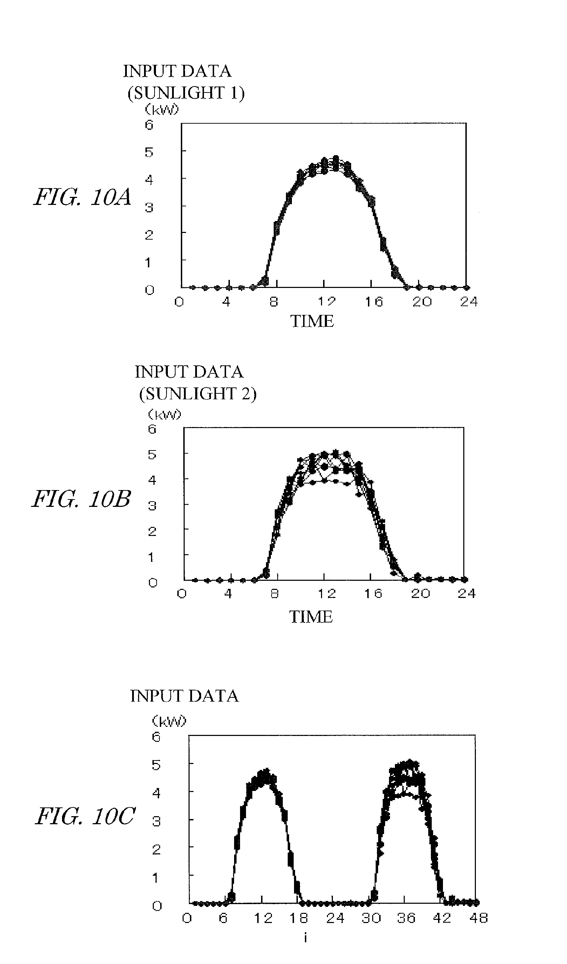

FIG. 10 is an explanatory diagram showing past electric-power-generation-level data in FIGS. 10A and 10B of solar power generation plants at two locations and time-series data including both pieces of data in FIG. 10C;

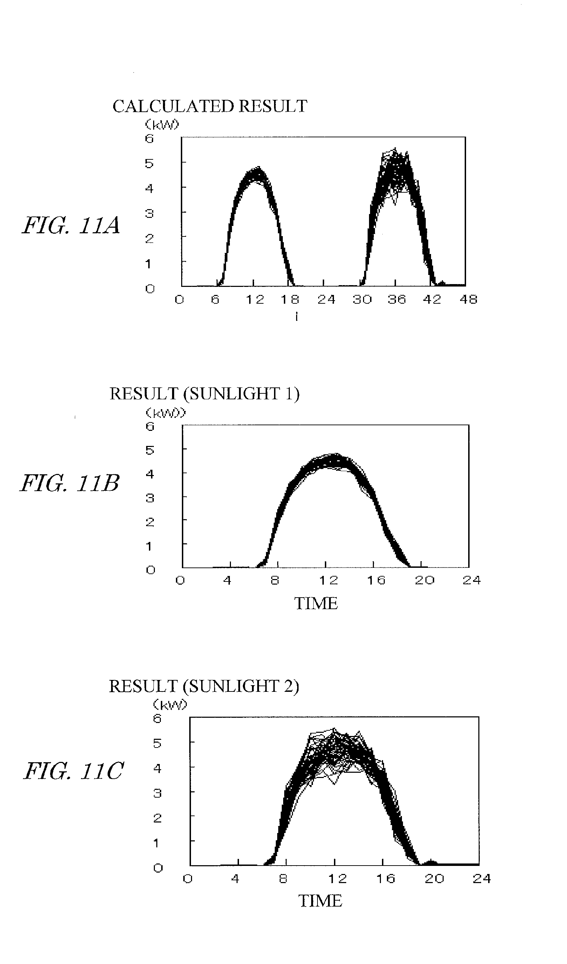

FIG. 11 is an explanatory diagram showing a predicted value of electric power generation levels including solar power generation plants at two locations in FIG. 11A, and predicted values in FIGS. 11B and 11C of the electric power generation levels of respective solar power generation plants;

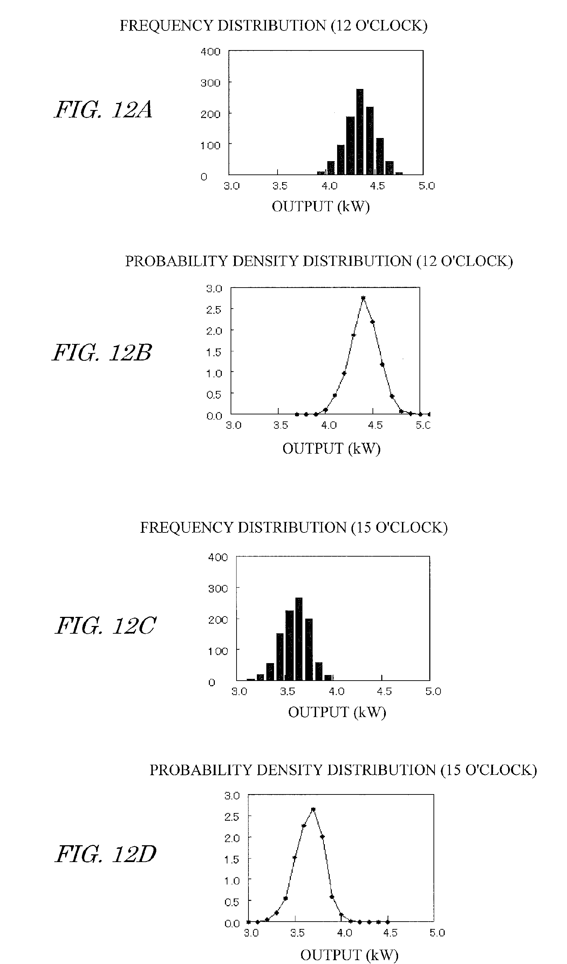

FIG. 12 is an explanatory diagram showing a frequency distribution in FIG. 12A of a power generation output in the case of FIG. 11B, a probability density distribution in FIG. 12B, a frequency distribution in FIG. 12C of a power generation output in the case of FIG. 11C, and a probability density distribution in FIG. 12D;

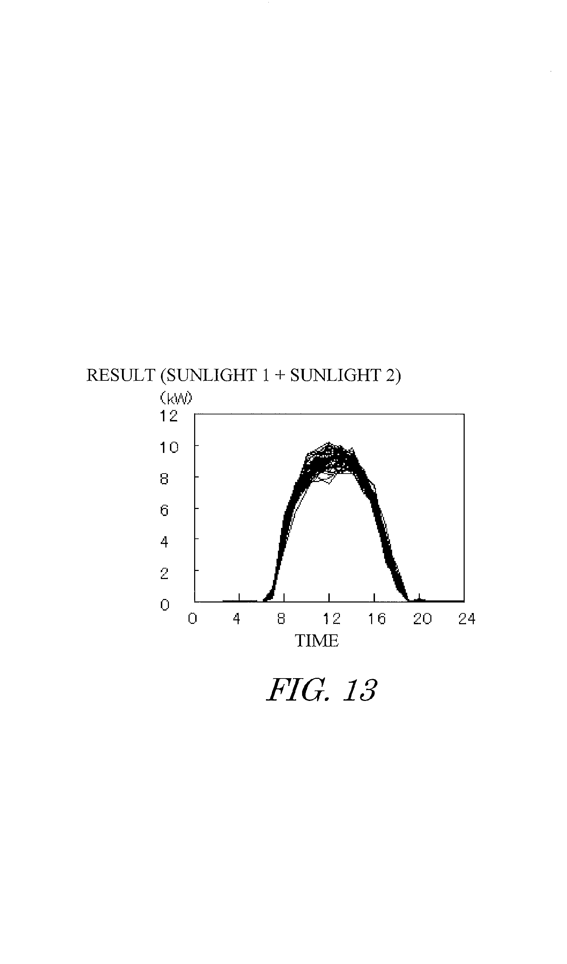

FIG. 13 is an explanatory diagram showing a total electric power generation level of the cases of FIG. 11B and FIG. 11C;

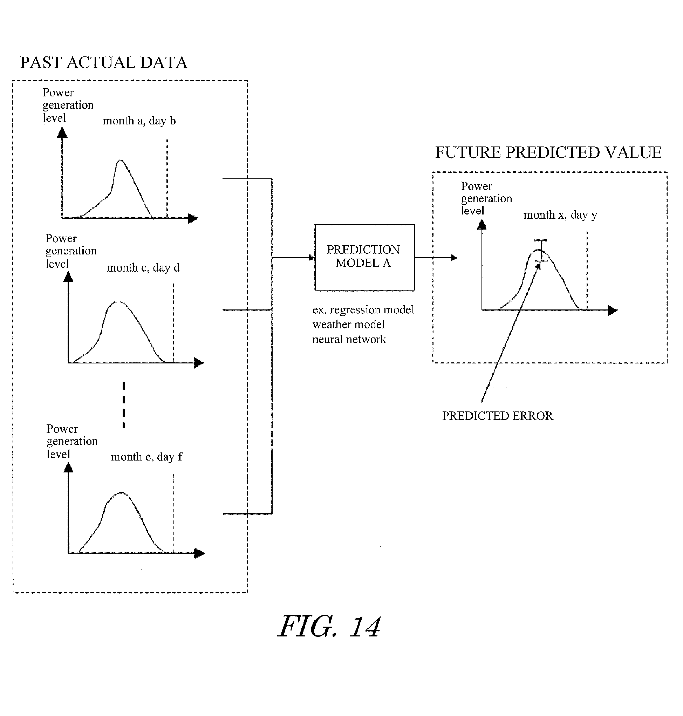

FIG. 14 is a conceptual diagram showing an example conventional prediction model;

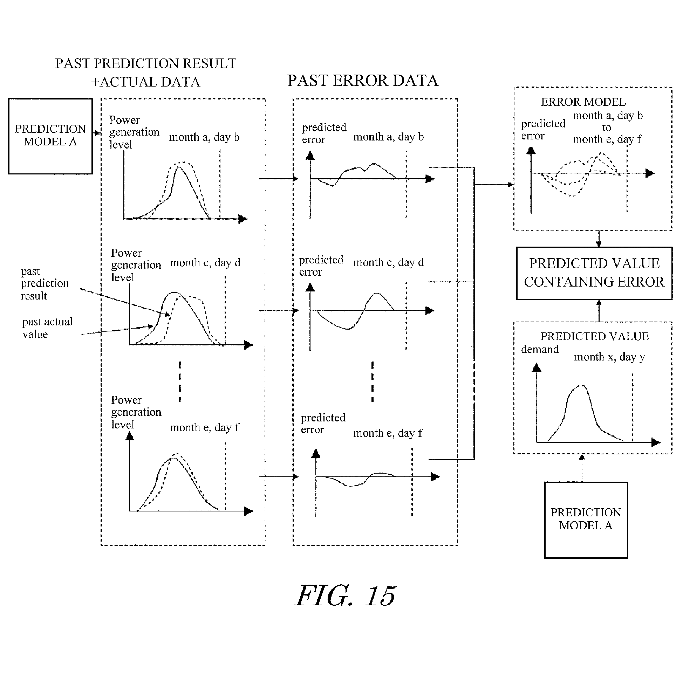

FIG. 15 is a conceptual diagram showing an example case in which the embodiment shown in FIG. 1 is applied to a conventional prediction model;

FIG. 16 is an explanatory diagram showing example wind speed data in TOKYO in August of any given year;

FIG. 17 is an explanatory diagram showing example wind direction data in TOKYO in August of any given year;

FIG. 18 is an explanatory diagram showing an example conversion table of wind direction data; and

FIG. 19 is an explanatory diagram showing an example solar radiation amount in TOKYO in December of any given year.

DETAILED DESCRIPTION

An explanation will be given to embodiments with reference to the accompanying drawings.

[1. Configuration of Embodiment]

First, a configuration of an embodiment will be explained. That is, as shown in FIG. 1, an electric-power-generation level predicting apparatus 1 of this embodiment can be realized by controlling a general-purpose computer, such as a personal computer or a server device, through a predetermined program. In this case, the program physically utilizes the hardware of the computer to realize the process of each unit to be discussed later, and each of a method for such a process, a program, and a recording medium having stored therein the program is also one aspect of the embodiments.

The electric-power-generation level predicting apparatus 1 includes a prediction process unit 10, a memory unit 20, an input unit 30, and an output unit 40, etc. The prediction process unit 10 includes a similar day selecting unit 11, a time-series data generator unit 12, a predicted-value calculating unit 13, and an electric-power-generation-level totaling unit 14, etc., activated by the execution of the above-explained program.

The similar day selecting unit 11 is a process unit that selects a similar day to a prediction target day based on weather forecast data, etc., of the prediction target day, and past data (weather data, such as wind-speed-wind-direction data and solar radiation level data; and electric-power-generation-level data of each electric power generator). The time-series data generator unit 12 is a process unit that extracts data in each selected similar day in a time-series manner.

The predicted-value calculating unit 13 is a process unit that calculates a predicted value of the electric power generation level of each electric power generator. The electric-power-generation-level totaling unit 14 is a process unit that calculates a predicted value of a total electric power generation level based on the predicted value of the electric power generation level of each electric power generator.

The predicted-value calculating unit 13 includes a variance-covariance-matrix generator unit 131, a random-number generator unit 132, and an electric-power-generation-level calculating unit 133. The variance-covariance-matrix generator unit 131 is a process unit that generates a variance-covariance matrix based on the extracted data in time series. The random-number generator unit 132 is a process unit that generates a random number in accordance with a probability distribution based on the generated variance-covariance matrix, thereby generating a predicted value (wind-speed-wind-direction data, electric-power-generation-level data, and solar radiation amount data, etc.). The electric-power-generation-level calculating unit 133 is a process unit that calculates a predicted value of the electric power generation level of each electric power generator based on the predicted value (the wind-speed-wind-direction data, and the solar-radiation-amount data, etc.).

The memory unit 20 is a configured unit that stores various pieces of information, such as necessary data for a process by the prediction process unit 10, and a calculated predicted value. Those pieces of information are input from the input unit 30 to be discussed later or input from the exterior through a communication network, and stored. The memory unit 20 is typically a built-in or externally connected various memories, hard disks, optical disks, etc., but all memory medium available presently or in future can be used.

The input unit 30 is a configured unit which inputs necessary information for the electric-power-generation level predicting apparatus 1, and for inputting selection and instruction of a process. Examples of such an input unit 30 are a keyboard, a mouse, and a touch panel (including one built in a display device), etc. However, all input devices available presently or in future are included. Hence, a sound inputting device through a sound input is also included. Moreover, it may be simply a switch, etc.

The output unit 40 outputs various data and a calculated predicted value, etc., in a form recognizable to users including a manager and an operator, etc. Examples of such an output unit 40 are a display device and a printer. However, all output devices available presently or in future are included. Hence, a sound outputting device through a sound output is also included.

[2. Action of Embodiment]

[2-1. Outline of Process]

According to this embodiment, weather data or electric-power-generation-level data is subjected to modeling through a multidimensional normal distribution, a multiple number of random numbers in accordance with the multidimensional normal distribution are generated through the variance-covariance matrix, and plural sets of time-series data to which an occurrence probability is added are generated, thereby calculating a predicted value.

[2-2. Prediction based on Wind-speed-wind-direction Data]

Next, an explanation will be given of an action of this embodiment. First, with reference to FIG. 2, an explanation will be given of an example case in which the electric power generation level of an electric power generator through wind power generation is predicted based on wind-speed-wind-direction data. FIG. 2 is a flowchart showing procedures and flows of data for predicting wind-speed-wind-direction data and calculating the predicted value of an electric power generation level based on the predicted wind-speed-wind-direction data.

First, the similar day selecting unit 11 selects N number of days (where N is an arbitrary integer equal to or greater than two) having similar weather data to the prediction target day based on the weather forecast data of the prediction target day and past weather data (D1-1) at the location of each electric power generator (step 101). How to select a day having similar weather data to the target day in the past data is not limited to any particular scheme.

For example, a simple scheme is possible which selects a day having a portion of information in the weather data matching with the target, such as sunny in a morning and cloudy in an afternoon. Moreover, a scheme of, for example, selecting a day having similar numeric information in the weather data like a fine weather index or a cloud amount may be applicable.

The time-series data generator unit 12 generates, as time-series data (D1-2) of M number of electric power generators (where M is an arbitrary integer equal to or greater than 1) at K number of time points in the selected N number of similar days, a set (by what corresponds to the K number of time points, the N number of days, and M number of electric power generators) of two kinds of data: a wind speed; and a wind direction, from wind-speed-wind-direction data included in the weather data (D1-1) of the similar days (step 102). Note that K indicates a number of time points when the time axis of a day for 24 hours is divided into a predetermined interval, and when, for example, the interval is for each one hour, K =24, and when the interval is for each two hours, K = 12.

The variance-covariance-matrix generator unit 131 generates a variance-covariance matrix of $(2 \times K \times M)$ rows and $(2 \times K \times M)$ columns from those pieces of time-series data (D1-2) (step 103). Next, the random-number generator unit 132 generates L sets (where L is an arbitrary integer equal to or greater than 2) of random numbers of $(2 \times K \times M)$ numbers using the variance-covariance matrix, thereby generating L sets of data (by what corresponds to the K number of time points, the M number of electric power generators, and L patterns) that are predicted values (D1-3) of two kinds: a wind direction; and a wind speed at the locations of respective wind power generators (step 104). The process of generating the variance-covariance matrix and the process of generating the random numbers will be discussed later in detail.

Thereafter, the electric-power-generation-level calculating unit 133 generates L sets (by what corresponds to the K number of time points, and M number of electric power generators) of predicted values (D1-4) of the electric power generation level of respective electric power generators at the K number of time points from the predicted values (D1-3) of a wind speed and a wind direction (step 105). The L sets of data have a time correlation and a positional correlation same as those of the original data of the N number of days, and correspond to a prediction result of the electric power generation level. Hence, the electric-power-generation-level totaling unit 14 totals the predicted values (D1-4) of the electric power generation levels of respective electric power generators, and thus an predicted value (D1-5) of the whole electric power generation level is obtained (step 106).

[2-3. Prediction based on Solar-Radiation-Amount Data]

According to this embodiment, instead of the wind-direction-wind-speed data, the solar radiation amount data can be used to predict the electric power generation level of an electric power generator through solar power generation.

The procedures are basically similar to those of the above-explained case. That is, selection of the similar days based on weather forecast data and past weather data, generation of time-series data of a solar radiation amount based on solar-radiation-amount data included in the weather data of the selected similar days, generation of a variance-covariance matrix, and generation of random numbers are carried out.

In this case, when pieces of data by what corresponds to M number of electric power generators and K number of time points are used, a variance-covariance matrix of (K × M) rows and (K × M) columns is obtained, and eventually, L sets of random numbers of (K × M) numbers are obtained. Those are predicted values of a solar radiation amount, and the predicted value and the total value of the electric power generation level are obtained based on the predicted values.

[2-4. Prediction based on Electric Power Generation Level]

According to the above-explained case, the process of converting the predicted values of the wind direction and the wind speed and the predicted value of the solar radiation amount into a predicted value of the electric power generation level (the calculation of the predicted value of the electric power generation level by the electric-power-generation-level calculating unit 133) is executed. However, such a conversion process is not always necessary. That is, according to this embodiment, it is possible to predict an electric power generation level based on past electric-power-generation-level data.

An explanation will be given of an example case in which electric-power-generation-level data is directly obtained with reference to the flowchart of FIG. 3. First, the similar day selecting unit 11 selects N number of past days having a similar condition based on the weather forecast data of the prediction target day and past weather data (D1-1) (through, for example, the similar scheme to the above-explained similar days) (step 201).

The time-series data generator unit 12 extracts, as the time-series data (D2-2) of the selected N number of similar days, sets (by what corresponds to the K number of time points, the N number of days, and the M number of electric power generators) of electric-power-generation-level data of each electric power generator from the electric-power-generation-level data (D2-1) of the selected N number of similar days (step 202). The variance-covariance-matrix generator unit 131 statistically analyzes those pieces of time-series data (D2-2), thereby generating a variance-covariance matrix (step 203).

Next, the random-number generator unit 132 generates, using the variance-covariance matrix, L sets of random numbers, thereby obtaining an predicted value (D2-3) of the electric power generation level of each electric power generator (step 204). Moreover, the electric-power-generation-level totaling unit 14 totals the predicted values (D2-3) of the electric power generation levels of respective electric power generators, thereby obtaining an predicted value (D2-4) of the whole electric power generation level (step 205).

As explained above, the predicted values (by what corresponds to the K number of time points, the M number of electric power generators, and the L patterns) of the electric power generation level and a total value thereof (by what corresponds to the K number of time points and the L patterns) can be obtained without through a conversion from the predicted values of the wind direction and the wind speed, and the predicted value of the solar radiation amount. FIG. 3 is for the case of the wind power generator, but the same is true of the case of the solar power generator.

[2-5. Generation of Variance-covariance Matrix and Generation of Random Numbers]

Next, schemes of generating the variance-covariance matrix and generating the random numbers will be explained through an example case in which the electric power generation level of a solar power generator is predicted. In this example, the K number of time points are 24 points for each one hour, and the explanation will be given of an example scheme of predicting the electric power generation level of an electric power generator (i.e., M = 1) in consideration of a time correlation.

That is, the memory unit 20 stores in advance pieces of data $\{x_i\}$ that are the collection of electric-power-generation-level data for each time of day among plural days. The similar day selecting unit 11 selects similar days using, for example, a sorting algorithm. The time-series data generator unit 12 decomposes the electric power generation level of the selected similar day into an electric power generation level $x_i$ at a time i per an hour, and generates time-series data that is a vector having $x_1$ to $x_{24}$ arranged side by side.

The variance-covariance-matrix generator unit 131 generates, from this time-series data, a variance-covariance matrix having 24 x 24 components like the following [Formula 1] in order to consider the relationship in the electric power generation level between times. Note that $var(x_i)$ is a variance of $\{x_i\}$, and $cov(x_i, x_j)$ is a covariance of $\{x_i\}$ and $\{x_j\}$. In order to calculate the variance and the covariance, at least equal to or greater than two days are necessary for obtaining electric-power-generation-level data. It is fine if the number of days for obtaining the electric-power-generation-level data is two, but the larger the number of days becomes, the higher the prediction precision becomes.

[Formula 1]

$$\Sigma \;=\; \begin{pmatrix} \mathrm{var}(x_1) & \mathrm{cov}(x_1, x_2) & \cdots & \mathrm{cov}(x_1, x_{24}) \\ \mathrm{cov}(x_2, x_1) & \mathrm{var}(x_2) & \cdots & \mathrm{cov}(x_2, x_{24}) \\ \vdots & \vdots & \vdots & \vdots \\ \mathrm{cov}(x_{24}, x_1) & \mathrm{cov}(x_{24}, x_2) & \cdots & \mathrm{var}(x_{24}) \end{pmatrix}$$

The random-number generator unit 132 generates multiple numbers of 24-dimensional random numbers based on the variance-covariance matrix, and generates a predicted value 24 of the electric power generation level.

In this case, it is necessary to define a probability distribution followed by the electric power generation level at each time. An explanation will be given of an example case in which a 24-dimensional normal distribution is applied. That is, when a 24-dimensional vector x = (x1, x2, x3, ... and x24) follows a 24-dimensional normal distribution, a probability density function satisfied by x can be expressed as the following [Formula 2] using an average-value vector $\mu$= ($\mu$1, $\mu$2, $\mu$3, ... and $\mu$24) of x.

[Formula 2]

$$f(\mathbf{x}; \mu, \Sigma) = \frac{1}{(2\pi)^{N/2} \, |\Sigma|^{1/2}} \, \exp\left\{ -\frac{1}{2}(\mathbf{x} - \mu)\Sigma^{-1}(\mathbf{x} - \mu)^{T} \right\}$$

The electric-power-generation-level data by a day can be deemed as a 24-dimensional vector x. In this embodiment, it is referred to as an electric-power-generation-level scenario. By generating multiple sets of 24 random numbers following the probability distribution of [Formula 2], an arbitrary number of electric-power-generation-level scenarios can be generated. The electric-power-generation-level scenario represents the statistical characteristic of past electric-power-generation-level data.

That is, the fluctuation range for each time can be represented by a variance for each time, and a correlation between times can be represented by a covariance. Moreover, even if the amount of past electric-power-generation-level data is merely for two days, for example, a million of electric-power-generation-level scenarios can be generated.

Next, an explanation will be given of a scheme of generated L sets of random numbers following the particular probability distribution and having a correlation given to each other. An explanation will be given of an example case in which L sets of 24 random numbers having a correlation with each other are generated.

First, a distribution of past data is obtained for each time of day, and L number of random numbers following such a distribution are generated. An example of the simplest way of generating random numbers following a particular distribution is a rejection technique. This is a technique of generating uniform random numbers within a region defined by the domain of a distribution function and a range thereof, and rejecting ones that exceed the value of the distribution function among such random numbers.

This technique can be applied to all distribution functions, but the efficiency is not always good. Moreover, when the domain is not a finite range, it is not easy to apply such a technique. If there is a reverse function of a particular distribution, it is easy to generate random numbers following the particular distribution based on uniform random numbers. This will be repeated for each time of day in 24 hours.

L number of random numbers are generated by what corresponds to 24 hours through the above-explained processes. In this stage, the set of random numbers for each time has no correlation with a set of random numbers at another time, and is independent from each other. However, the random numbers generated through a general algorithm are pseudo random numbers, and even if it is attempted to generate independent random numbers, in general, there is a possibility that such random numbers have a correlation. Hence, those are converted into a set of random numbers independent from each other through a principal component analysis as needed.

As a result, a random-number matrix having components of L rows by 24 columns (L × 24) is obtained. In this stage, each random number is normalized through a variable conversion so as to have a standard deviation of 1 and an average of 0. A normalized random-number matrix G is obtained in this fashion.

Next, a correlation-coefficient matrix R of 24 × 24 is subjected to Cholesky decomposition, and is decomposed to an upper triangular matrix $T_U$ and a lower triangular matrix $T_L$. The correlation-coefficient matrix can be obtained by normalizing a variance-covariance matrix $\Sigma$.

[Formula 3]

$$R = T_U T_L$$

Thereafter, the normalized random-number matrix G is subjected to a multiplication with the upper triangular matrix $T_U$ from the right, thereby generating a normalized random-number matrix having a correlation.

[Formula 4]

$$G' = GT_U$$

A standard deviation of each time is placed on a diagonal line of the obtained solution, and this is subjected to a multiplication with a standard-deviation matrix S of 24 rows by 24 columns (24 × 24) having other components that are 0 from the right, and an average-value matrix A of L rows by 24 columns (L × 24) having the average-value vectors $\mu$ arranged by L rows is added. Eventually, a random-number matrix G" having an average, a variance, and a correlation to be obtained is obtained.

[Formula 5]

$$G'' = G'S + A$$

The matrix G" is a prediction result itself, and N number of vectors at each row (1 row by 24 columns) of G" correspond to each prediction result.

When, for example, the number of time division is large or when a correlation between electric power generation levels is intensive, an error by a cancellation of significant digits increases as a problem over a calculation of a numeric value, and the Cholesky decomposition of the correlation-coefficient matrix R becomes difficult in some cases. In this case, eigenvalue decomposition or singular value decomposition is applied as needed. Note that in the above-explained generation scheme, instead of dividing a day into 24 hours, a division by arbitrary hours can be applied. That is, the unit of division is optional.

[3. Specific Application Result]

Next, an explanation will be given of a result of an application of the prediction process of this embodiment to a specific case.

[3-1. Prediction of Electric Power Generation Level by Solar Power Generation]

FIG. 4 shows an example plotting past electric power generation levels of solar power generation. In this case, data of seven days for each two hours are indicated. That is, K = 12 and N = 7. In this example, it is presumed that days having a similar weather condition are already selected through the similar day selecting process. Even if the weather condition is consistent, the electric power generation level may fluctuate due to a minor difference in a temperature or in an amount of clouds. FIG. 5 has the data of FIG. 4 overwritten.

FIG. 6 shows an electric-power-generation-level scenario generated through the scheme of this embodiment. In this case, 50 kinds of prediction results (L = 50) are generated using the random numbers. However, the number of prediction results is not limited to 50. It is clear from FIG. 6 that the prediction result of the electric power generation level precisely represents the data of FIG. 5. What is important in FIG. 6 is that a correlation between times of day in the original data is represented in the prediction result. FIG. 7 shows a correlation-coefficient matrix of this example case. This can be obtained by normalizing the variance-covariance matrix.

When there are a plurality of solar power generators, if those generators fluctuate at random with each other, an effect of smoothing can be perceived. When there is a correlation between the electric power generation levels with each other, the effect of smoothing becomes small. In this embodiment, it is possible to simulate such a situation.

[3-2. Prediction of Electric Power Generation Level by Wind Power Generation]

FIG. 8 shows an example case in which a wind speed and a wind direction are predicted in order to predict the electric power generation level of wind power generation. In FIG. 8, FIG. 8A is an example of past wind speed data, and FIG. 8B is an example of corresponding wind direction data. In this example, like the case of FIG. 17, the wind direction is indicated in numerical terms.

The wind direction and the wind speed have a correlation with each other, and thus it is necessary to predict both simultaneously. Hence, as shown in FIG. 8C, corresponding data are arranged as a matter of form to generate time-series data. Since the wind speed and the wind direction each have 24 pieces of data, wind power data is in a time series of 48 time points. In FIG. 8C, such five time series are plotted in a superimposed manner.

From those five time series, the variance of data at respective time points and the covariance between different time points are calculated, thereby generating the variance-covariance matrix of 48 x 48. Next, using this variance-covariance matrix, random numbers following a 48-dimensional normal distribution are generated, and thus an arbitrary number of time series having a length corresponding to 48 time points can be generated.

FIG. 9A shows time-series data generated in this fashion. Each time series has information on both wind speed and wind direction, has the same variance as that of the original data at each time point, and the covariance between the time points represents the information of the original data. That is, it is a prediction result in consideration of a correlation between, for example, a wind speed at 13 O'clock and a wind direction at 18 O'clock. FIGS. 9B and 9C are obtained by dividing the time series in FIG. 9A at the center thereof and plotting a wind speed and a wind direction at each time.

[3-3. Prediction of Electric Power Generation Level by Plural Electric Power Generators]

Next, an explanation will be given of an example case in which the prediction process is performed when there are a plurality of electric power generators through natural energies which are, for example, solar power generators. When respective electric power generation levels of the plurality of solar power generators have no correlation with each other, it is possible to predict individual electric power generation level. However, it is normal that respective electric power generation levels of the plurality of solar power generators have a correlation with each other through weather data. It is also known that if the electric power generation levels of the plurality of solar power generators are totaled, the fluctuation becomes small. In this case, when a correlation is small, the possibility of smoothing the fluctuation is high but when a positive correlation is intensive, no fluctuation is subjected to smoothing.

When, for example, prediction is performed for M number of solar power generators, if the number of time points is 24, a variance-covariance matrix having components of $(M \times 24)$ rows by $(M \times 24)$ columns is generated, and $(M \times 24)$-dimensional random-number vectors are multiply generated, thereby enabling a prediction of the electric power generation level of each solar power generator.

FIG. 10 plots the electric power generation levels of the solar power generation plants at two locations. Sunlight data 1 of FIG. 10A and sunlight data 2 of FIG. 10B were measured simultaneously in past in each day for 24 time points, and data by what corresponds to 10 days are overwritten. Those pieces of data have a correlation with each other.

FIG. 10C shows time-series data of 48 time pints obtained by interconnecting pieces of data on the same day in the matter of form and plotting those pieces of data. A variance-covariance matrix of 48 rows by 48 columns is generated through the above-explained method based on the data shown in FIG. 10C to generate random numbers, and generated time-series data is shown in FIGS. 11A to 11C. FIG. 11A shows a calculation result, and also shows 50 patterns of time series. FIGS. 11B and 11C are results obtained by dividing the time series shown in FIG. 11A, and respectively indicate an predicted value of an electric power generation level of the solar power generation plant 1 and that of the solar power generation plant 2.

In FIGS. 11A to 11C, multiple pieces of time-series data are plotted as lines, respectively, and in this case, the realization probability of each time-series data is equal. Hence, the density of the line of the time-series data at any given time and at any given output point in FIGS. 11A to 11C is proportional to the realization probability of the output at that time.

FIG. 12A shows a frequency distribution of the generated electric power output by the solar power generation plant 1 in FIG. 11B at 12 O'clock. In this case, a frequency is calculated based on 1000 pieces of time-series data. Moreover, FIG. 12B shows the probability density distribution thereof. An expected value of a prediction result and an occurrence probability can be calculated from the probability density distribution. For example, it is possible to predict that the generated electric power output becomes 4 kW to 4.9 kW at a probability of 95 %. Likewise, FIGS. 12C and 12D show a frequency distribution and a probability density distribution of the output by the solar power generation plant 2 in FIG. 11C at 15 O'clock.

The electric power generation level in FIG. 11B and the electric power generation level in FIG. 11C have a fluctuation which does not occur independently, but it means that when R-th time-series data is realized in the solar power generation plant 1, the R-th time-series data is also realized in the solar power generation plant 2. Hence, it is easy to obtain the total of the electric power generation level of the solar power generation plant 1 and that of the solar power generation plant 2, and it is appropriate if the total is calculated for each time of day using the corresponding pieces of time-series data.

FIG. 13 shows the total of the electric power generation levels of the above-explained two solar power generation plants. From this figure, it can be perceived how much the total electric power generation level fluctuates. This fluctuation level cannot be obtained by just totaling the predicted errors of the electric power generation level through the conventional prediction models. This fluctuation level is the fluctuation actually given to the system, and is the fluctuation level which must be considered in a demand-supply control and a load frequency control.

In the load frequency control, when, for example, the electric power generation level of a load and that of the other electric power generator are constant, the fluctuation range of the frequency is proportional to the fluctuation range of the electric power generation level through natural energies. A proportional constant at this time is a load frequency constant. Hence, when the fluctuation range shown in FIG. 13 is divided by the total electric power generation level of the system by a frequency calculating unit provided in the prediction process unit 10 shown in FIG. 1, and multiplied by the inverse of the load frequency constant, a volatility of the frequency can be obtained. In the example case shown in FIG. 13, the number of the solar power generators is two, but the same scheme can be applied when the number of the electric power generators is large.

[4. Advantageous Effect of Embodiment]

According to the above-explained embodiment, with respect to past data on electric power generation levels, a predicted value is calculated in consideration of a statistical correlation between different times, and thus the electric power generation level of a particular electric power generator can be predicted precisely. Moreover, the predicted value is calculated in consideration of a statistical correlation between locations of different electric power generators, and thus respective electric power generation levels of multiple number of electric power generators can be predicted precisely. That is, the electric power generation level of each electric power generator can be predicted as a set of plural pieces of time-series data to which the occurrence probability is given in consideration of a statistical correlation of the electric power generation level between different times having different weather data and electric-power-generation-level data or a statistical correlation of the electric power generation level at the same time between the electric power generators at different locations. Hence, even in the case of an electric power generation plant and electric power system including electric power generators that have respective electric power generation levels uncertainly fluctuating, the electric power generation level can be predicted precisely through a statistical probabilistic scheme.

Moreover, when the electric power generation levels of multiple number of electric power generators are predicted, a prediction in consideration of a time correlation and a positional correlation is enabled. Furthermore, when there are plural electric power generators and electric power generation plants, respective electric power generation levels are totaled (which is also possible for each specific group), and the total electric power generation level can be predicted. Still further, a fluctuation level of the electric power generation level of the system can be evaluated based on the prediction result of the total electric power generation level of the multiple number of electric power generators, and a frequency fluctuation of the system can be also evaluated.

When the electric power generation level through wind power generation is predicted, the electric power generation level can be evaluated by predicting a wind direction and a wind speed, or the electric power generation level is predictable directly. When the electric power generation level through solar power generation is predicted, it can be applied to a prediction of the amount of solar radiation, but the electric power generation level is predictable directly. Hence, through the prediction of the electric power generation level, predicted values of a wind direction and a wind speed or a predicted value of an amount of solar radiation can be obtained.

Note that successive events that occur simultaneously in the world are considerable as a scenario. A solar power generation scenario, a wind power generation scenario, and a load scenario belonging to the same scenario have a higher possibility that those events occur simultaneously, and the necessary electric power generation level to be output by a normal electric power generation plant can be also evaluated from those events. Together with such an evaluation, necessary costs and the amount of fuel can be evaluated including a fluctuation. Accordingly, an expected value of costs can be also evaluated from those scenarios.

[5. Other Embodiments]

The invention is not limited to the above-explained embodiments. For example, the specific contents and values of various pieces of information used in the invention are optional, and are not limited to any specific contents and values. "An predicted value relating to an electric power generation level" and "past data relating to an electric power generation level" in this specification are broad concepts containing various kinds of information relating to an electric power generation level, such as weather data, electric-power-generation-level data, and error data (to be discussed later).

Moreover, according to the above-explained example, random numbers following a multi-dimensional normal distribution are used, but the probability distribution is not limited to the normal distribution. For example, a logarithmic normal distribution, an index distribution, a Weibull distribution, a beta distribution, and other arbitrary distributions are applicable. A distribution form can be generated from the actual electric power generation level through a function approximation. Like the solar power generation level, when the upper limit (depending on the amount of solar radiation at the time of fine weather) and the lower limit (= 0) are theoretically set, if, for example, the beta distribution is applied, the fitting can have an improved precision.

That is, weather data or electric power generation level data are subjected to modeling using the above-explained distribution, and multiple number of random numbers following such a distribution are generated using a variance-covariance matrix to generate a set of plural pieces of time-series data to which an occurrence probability is given, thereby calculating a predicted value. This is also within the scope and spirit of the invention.

When the scheme of the above-explained embodiment and that of the modified example thereof are combined with the conventional prediction models, the precision can be improved. FIG. 14 is a conceptual diagram showing a conventional prediction model. A large number of models for predicting a future have been proposed for not only the case of solar power generation. Those models are all to predict a future value based on pieces of information obtained presently.

In order to do so, various kinds of and a large number of models, such as a regression model and a neural network, are used. In this case, in general, a relationship between past weather information and an electric power generation level is subjected to modeling. A past actual value (e.g., actual weather data and electric-power-generation-level data) are used in some cases, but normally, a predicted value in past (predicted values of weather data and electric-power-generation-level data, etc.) is not used. Moreover, in order to evaluate an error and a fluctuation of a predicted value in future, an error bar and a standard deviation are applied.

Conversely, FIG. 15 shows an example model obtained by applying the scheme of the above-explained embodiment to a conventional prediction technique. In this case, typically, only a predicted value in past and an actual value in past are used. In order to obtain the predicted value in past, any given prediction model A was used in past, but the scheme of this prediction model is not limited to any particular one (which may be the prediction model of the above-explained embodiment).

Error data in past can be obtained from a difference between the actual value in past and the predicted value in past. Such error data can be calculated by, for example, an error-data computing unit provided in the prediction process unit 10. Alternatively, error data input from the input unit 30 or through a communication network from the exterior and stored in the memory unit 20 can be used.

The error data is generated as a set of error data in time series by the time-series data generator unit 12. For example, calculation is carried out for each certain period, such as a day, a week, or a month in past, and the sets of error data in time series can be obtained by what corresponds to the number of days, weeks, or months where pieces of data are present. It is presumed that the number of sets of the error data in time series is K (where $K \geq 2$).

Conversely, an predicted value in future is predicted through the above-explained any given prediction model A, but according to the scheme shown in FIG. 15, an error of a prediction result in future can be evaluated using the above-explained sets of the error data in time series. That is, according to the above-explained scheme, the variance-covariance-matrix generator unit 131 generates a variance-covariance matrix from the K sets of the error data in time series, and the random-number generator unit 132 generates L sets of time series corresponding to predicted values of the error data. This is a predicted value of an error expected when the particular prediction model A is used.

Hence, when a correcting unit provided in the prediction process unit 10 performs correction of adding such time series to the prediction result obtained through the particular prediction model A, a prediction result having a high realization probability can be obtained. When, for example, there is a strong tendency that the particular prediction model A outputs a smaller prediction result than an actual value, there is a tendency that a negative time-series data of the error is obtained. The time-series data of the prediction result reflects such a feature.

According to the above-explained example, it becomes possible to predict, including the error, the future electric power generation level of an electric power generator having the uncertain electric power generation level like the electric power generator through natural energies based on past weather data or electric-power-generation-level data. Once an electric-power-generation-level scenario is generated, it becomes easy to create a power generation plan through the technology similar to the conventional technologies, and calculation of expected values of the electric power generation level, costs for power generation, and profits, or selection of the optimized power generation plan are enabled using the created power generation plan scenario.

In this case, the above-explained particular prediction model can be any given one. It is desirable that the prediction model should have a high precision, but even if a model with a poor precision is used, as explained above, by using a predicted value of the error data, the precision can be improved. In general, a prediction model has a precision deteriorated as time advances, but there is an advantage that when a predicted value of the error data is used, the same prediction model can be used for a long time.

The time-series data is not limited to the cases of solar power generation and wind power generation. It is possible to predict not only geothermal power generation, wave activated power generation, tidal power generation and other electric power generation through natural energies but also demand data of a particular area. Needless to say, the prediction target can be the error thereof in time series. Moreover, when a prediction based on weather data is difficult like the tidal power generation, it is possible to predict the fluctuation level of an electric power generation level based on only actual data of the electric power generation level in past.

Several embodiments have been explained above, but those embodiments are given as illustrative purposes, and are not to limit the scope and spirit of the invention. Those novel embodiments can be carried out in various other forms, and permit various omission, replacement, and change without departing from the scope and spirit of the invention. Those embodiments and modified examples are within the scope and spirit of the invention and the overview thereof, and are also included within scope and spirit of the invention set forth in the appended claims and the equivalents thereof.

**Claims**

1. An electric-power-generation level predicting apparatus that obtains a predicted value relating to an electric power generation level of equal to or greater than one electric power generator having an electric power generation level uncertainly fluctuating, the apparatus comprising:

    a past-data storing unit that stores, as past data relating to a past electric power generation level of at least one electric power generator, past data containing information at multiple time points in each day; and
    an predicted-value calculating unit that calculates, as time-series data containing an occurrence probability, an predicted value of the past data relating to an electric power generation level of the electric power generator based on a statistical correlation between different times in the past data or a statistical correlation between locations of the different electric power generators.

2. The electric-power-generation level predicting apparatus according to claim 1, wherein the past data is data on an electric power generation level.

3. The electric-power-generation level predicting apparatus according to claim 1, wherein
    the past data is weather data affecting an electric power generation level, and the predicted-value calculating unit comprises an electric-power-generation level calculating unit that converts a predicted value of the weather data into an electric power generation level.

4. The electric-power-generation level predicting apparatus according to claim 1, wherein the predicted-value calculating unit comprises:

    a variance-covariance-matrix generator unit that generates a variance-covariance matrix based on the past data; and
    a random-number generator unit that generates a random number following a probability distribution based on the variance-covariance matrix.

5. The electric-power-generation level predicting apparatus according to claim 1, further comprising an electric-power-generation-level totaling unit that calculates an predicted value of a total of a plurality of electric power generation levels based on predicted values of electric power generation levels of a plurality of electric power generators.

6. The electric-power-generation level predicting apparatus according to claim 5, further comprising a frequency calculating unit that calculates a fluctuation level of a frequency based on the predicted value of the total of the electric power generation levels.

7. The electric-power-generation level predicting apparatus according to claim 1, wherein the predicted-value calculating unit is configured to calculate, as an predicted value of error data of the past data, an error between a past actual value stored as the past data and a past predicted value containing an error and obtained from the actual value.

8. The electric-power-generation level predicting apparatus according to claim 7, further comprising a correcting unit that corrects, using an predicted value of the error data, an predicted value of weather data containing an error or an predicted value of electric-power-generation-level data containing an error obtained as a past predicted value containing an error.

9. An electric-power-generation level predicting method for causing a computer to predict an electric power generation level of equal to or greater than one electric power generator having an electric power generation level fluctuating uncertainly,
the computer comprising a past-data storing unit and a predicted-value calculating unit,
the method comprising processes of:

causing the past-data storing unit to store, as past data relating to a past electric power generation level of at least one electric power generator, past data containing information at multiple time points in each day; and causing the predicted-value calculating unit to calculate, as time-series data containing an occurrence probability, a predicted value of the past data relating to an electric power generation level of the electric power generator based on a statistical correlation between different times in the past data or a statistical correlation between locations of the different electric power generators.

10. An electric-power-generation level predicting program that is executed by a computer to cause the computer to predict an electric power generation level of equal to or greater than one electric power generator having an electric power generation level fluctuating uncertainly, the program causing the computer to execute processes of:

storing past data containing information at multiple time points in each day as past data relating to a past electric power generation level of at least one electric power generator; and
calculating, as time-series data containing an occurrence probability, a predicted value of the past data relating to an electric power generation level of the electric power generator based on a statistical correlation between different times in the past data or a statistical correlation between locations of the different electric power generators.

<u>1</u> ELECTRIC-POWER-GENERATION
LEVEL PREDICTING APPARATUS

PREDICTION PROCESS UNIT ╭ 10
╭ 11

| SIMILAR DAY SELECTING UNIT |

╭ 12

| TIME-SERIES DATA GENERATOR UNIT |

╭ 13

PREDICTED-VALUE
CALCULATING UNIT ╭ 131

VARIANCE-COVARIANCE-MATRIX
GENERATOR UNIT

╭ 132

RANDOM-NUMBER GENERATOR
UNIT

╭ 133

ELECTRIC-POWER-GENERATION-
LEVEL CALCULATING UNIT

╭ 14

ELECTRIC-POWER-GENERATION-
LEVEL TOTALING UNIT

╭ 30

INPUT UNIT

╭ 40

OUTPUT
UNIT

╭ 20

MEMORY UNIT

WEATHER
FORECAST DATA

WEATHER DATA

WIND-DIRECTION-
WIND-SPEED DATA

SOLAR-RADIATION-
AMOUNT DATA

POWER-GENERATION-
LEVEL DATA

TIME-SERIES DATA

WIND-DIRECTION-WIND-
SPEED PREDICTED VALUE

EACH POWER-
GENERATION-LEVEL
PREDICTED VALUE

TOTAL POWER-
GENERATION-LEVEL
PREDICTED VALUE

*FIG. 1*

START

S101

SELECT SIMILAR DAY BASED ON
WEATHER FORECAST, ETC.

D1-1

PAST WEATHER DATA AT
LOCATION OF EACH WIND
POWER GENERATOR

S102

GENERATE TIME-SERIES DATA ON
WIND SPEED AND WIND
DIRECTION

D1-2

SET OF TIME-SERIES DATA ON
WIND SPEED AND WIND
DIRECTION BY TWO KINDS × K
NUMBER OF TIME POINTS × N
DAYS × M NUMBER OF
GENERATORS

S103

GENERATE VARIANCE-
COVARIANCE MATRIX

D1-3

PREDICTED VALUES OF WIND
DIRECTION AND WIND SPEED AT
LOCATION OF EACH WIND POWER
GENERATOR BY TWO KINDS  K
NUMBER OF TIME POINTS  M
NUMBER OF GENERATORS  L
PATTERNS

S104

GENERATE RANDOM NUMBER
BASED ON VARIANCE-
COVARIANCE MATRIX

D1-4

PREDICTED VALUE OF EACH WIND
POWER GENERATION LEVEL BY K
NUMBER OF TIME POINTS  M
NUMBER OF GENERATORS  L
PATTERNS

S105

CALCULATE ELECTRIC POWER
GENERATION LEVEL BASED ON
WIND SPEED AND WIND
DIRECTION

D1-5

PREDICTED VALUE OF TOTAL
ELECTRIC POWER GENERATION
LEVEL OF WIND POWER
GENERATION BY K NUMBER OF
TIME POINTS  L PATTERNS

S106

TOTAL ELECTRIC POWER
GENERATION LEVELS OF M
NUMBER OF GENERATORS

END

FIG. 2

**D1-1**

PAST WEATHER DATA AT LOCATION OF EACH WIND POWER GENERATOR

START

**S201**

SELECT SIMILAR DAY BASED ON WEATHER FORECAST, ETC.

**D2-1**

PAST ELECTRIC POWER GENERATION LEVEL OF EACH WIND POWER GENERATOR

**S202**

GENERATE TIME-SERIES DATA ON ELECTRIC POWER GENERATION LEVEL

**D2-2**

SET OF TIME-SERIES DATA OF ELECTRIC POWER GENERATION LEVEL BY K NUMBER OF TIME POINTS N DAYS M NUMBER OF GENERATORS

**S203**

GENERATE VARIANCE-COVARIANCE MATRIX

**D2-3**

PREDICTED VALUE OF EACH WIND POWER GENERATION LEVEL BY K NUMBER OF TIME POINTS M NUMBER OF GENERATORS L PATTERNS

**S204**

GENERATE RANDOM NUMBER BASED ON VARIANCE-COVARIANCE MATRIX

**D2-4**

PREDICTED VALUE OF TOTAL ELECTRIC POWER GENERATION LEVEL OF WIND POWER GENERATION BY K NUMBER OF TIME POINTS L PATTERNS

**S205**

TOTAL ELECTRIC POWER GENERATION LEVELS OF M NUMBER OF GENERATORS

END

*FIG. 3*

*FIG. 4*

*FIG. 5*

FIG. 6

|      | H2   | H4   | H6   | H8   | H10  | H12  | H14  | H16  | H18  | H20  | H22  | H24  |
|------|------|------|------|------|------|------|------|------|------|------|------|------|
| H2   | 1    | 1.00 | 1.00 | 0.10 | 0.20 | 0.25 | 0.23 | 0.05 | 0.37 | 1.00 | 1.00 | 1.00 |
| H4   | 1.00 | 1    | 1.00 | 0.10 | 0.20 | 0.25 | 0.23 | 0.05 | 0.37 | 1.00 | 1.00 | 1.00 |
| H6   | 1.00 | 1.00 | 1    | 0.10 | 0.20 | 0.25 | 0.23 | 0.05 | 0.37 | 1.00 | 1.00 | 1.00 |
| H8   | 0.10 | 0.10 | 0.10 | 1    | 0.92 | 0.83 | 0.82 | 0.88 | 0.81 | 0.10 | 0.10 | 0.10 |
| H10  | 0.20 | 0.20 | 0.20 | 0.92 | 1    | 0.94 | 0.95 | 0.89 | 0.73 | 0.20 | 0.20 | 0.20 |
| H12  | 0.25 | 0.25 | 0.25 | 0.83 | 0.94 | 1    | 1.00 | 0.93 | 0.71 | 0.25 | 0.25 | 0.25 |
| H14  | 0.23 | 0.23 | 0.23 | 0.82 | 0.95 | 1.00 | 1    | 0.93 | 0.70 | 0.23 | 0.23 | 0.23 |
| H16  | 0.05 | 0.05 | 0.05 | 0.88 | 0.89 | 0.93 | 0.93 | 1    | 0.87 | 0.05 | 0.05 | 0.05 |
| H18  | 0.37 | 0.37 | 0.37 | 0.81 | 0.73 | 0.71 | 0.70 | 0.87 | 1    | 0.37 | 0.37 | 0.37 |
| H20  | 1.00 | 1.00 | 1.00 | 0.10 | 0.20 | 0.25 | 0.23 | 0.05 | 0.37 | 1    | 1.00 | 1.00 |
| H22  | 1.00 | 1.00 | 1.00 | 0.10 | 0.20 | 0.25 | 0.23 | 0.05 | 0.37 | 1.00 | 1    | 1.00 |
| H24  | 1.00 | 1.00 | 1.00 | 0.10 | 0.20 | 0.25 | 0.23 | 0.05 | 0.37 | 1.00 | 1.00 | 1    |

FIG. 7

INPUT DATA (WIND SPEED)

FIG. 8A

INPUT DATA
(WIND DIRECTION)

FIG. 8B

FIG. 8C

*FIG. 9A*

WIND SPEED SCENARIO

*FIG. 9B*

WIND DIRECTION SCENARIO

*FIG. 9C*

INPUT DATA
(SUNLIGHT 1)

FIG. 10A

INPUT DATA
(SUNLIGHT 2)

FIG. 10B

INPUT DATA

FIG. 10C

CALCULATED RESULT

(kW)

FIG. 11A

RESULT (SUNLIGHT 1)

(kW)

FIG. 11B

TIME

RESULT (SUNLIGHT 2)

(kW)

FIG. 11C

TIME

FREQUENCY DISTRIBUTION (12 O'CLOCK)

FIG. 12A

PROBABILITY DENSITY DISTRIBUTION (12 O'CLOCK)

FIG. 12B

FREQUENCY DISTRIBUTION (15 O'CLOCK)

FIG. 12C

PROBABILITY DENSITY DISTRIBUTION (15 O'CLOCK)

FIG. 12D

RESULT (SUNLIGHT 1 + SUNLIGHT 2)

FIG. 13

PAST ACTUAL DATA

FUTURE PREDICTED VALUE

Power generation level

month a, day b

Power generation level

month c, day d

Power generation level

month e, day f

PREDICTION MODEL A

ex. regression model
weather model
neural network

Power generation level

month x, day y

PREDICTED ERROR

FIG. 14

*FIG. 15*

**FIG. 16**

**FIG. 17**

| WIND DIRECTION | NUMBER |
|---|---|
| NORTH | 1 |
| NORTH-NORTHWEST | 2 |
| NORTHWEST | 3 |
| WEST-NORTHWEST | 4 |
| WEST | 5 |
| WEST-SOUTHWEST | 6 |
| SOUTHWEST | 7 |
| SOUTH-SOUTHWEST | 8 |
| SOUTH | 9 |
| SOUTH-SOUTHEAST | 10 |
| SOUTHEAST | 11 |
| EAST-SOUTHEAST | 12 |
| EAST | 13 |
| EAST-NORTHEAST | 14 |
| NORTHEAST | 15 |
| NORTH-NORTHEAST | 16 |
| NORTH | 17 |
| NORTH-NORTHWEST | 18 |
| NORTHWEST | 19 |
| WEST-NORTHWEST | 20 |
| WEST | 21 |

*FIG. 18*

*FIG. 19*

| INTERNATIONAL SEARCH REPORT | International application No. |
|---|---|
| | PCT/JP2011/001648 |

A.  CLASSIFICATION OF SUBJECT MATTER
*H02P9/00*(2006.01)i, *G06Q10/00*(2006.01)i, *G06Q50/00*(2006.01)i, *H02J3/00* (2006.01)i

According to International Patent Classification (IPC) or to both national classification and IPC

B.  FIELDS SEARCHED

Minimum documentation searched (classification system followed by classification symbols)
H02P9/00, G06Q10/00, G06Q50/00, H02J3/00

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2009-167848 A  (The Chugoku Electric Power Co., Inc.), 30 July 2009 (30.07.2009), (Family: none) | 1-10 |
| A | JP 2009-138523 A  (Mitsubishi Electric Corp.), 25 June 2009 (25.06.2009), (Family: none) | 1-10 |
| A | JP 2007-233639 A  (Tohoku Electric Power Co., Inc.), 13 September 2007 (13.09.2007), (Family: none) | 1-10 |

☐  Further documents are listed in the continuation of Box C.        ☐  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 14 June, 2011 (14.06.11) | 28 June, 2011 (28.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004289918 A

**Non-patent literature cited in the description**

- **AKINOBU MURATA ; HIROSHI YAMAGUCHI ; KENJI OHTANI.** Prediction technique of fluctuation in output range in solar power generation with multiple power generators installed at broad regions. *Thesis B,* 2007, vol. 127, 645-652